Europäisches Patentamt

European Patent Office

Office européen des brevets

(11) Veröffentlichungsnummer : **0 089 675**
**B1**

(12) **EUROPÄISCHE PATENTSCHRIFT**

(45) Veröffentlichungstag der Patentschrift :
28.05.86

(51) Int. Cl.⁴ : **B 29 C 45/16**

(21) Anmeldenummer : **83102814.7**

(22) Anmeldetag : **22.03.83**

(54) Verfahren zur Herstellung einer dreifarbigen Abdeckscheibe für eine Automobil-Signalleuchte.

(30) Priorität : **23.03.82 FR 8205058**

(43) Veröffentlichungstag der Anmeldung :
**28.09.83 Patentblatt 83/39**

(45) Bekanntmachung des Hinweises auf die Patenterteilung : **28.05.86 Patentblatt 86/22**

(84) Benannte Vertragsstaaten :
**DE GB IT**

(56) Entgegenhaltungen :
**CH-A- 384 384**
**FR-A- 2 083 293**
**FR-A- 2 172 128**
**FR-A- 2 287 989**
**FR-A- 2 301 357**
**FR-A- 2 380 864**

(73) Patentinhaber : **Signal Vision S.A.**
**39 Avenue Marceau**
**F-92400 Courbevoie (FR)**

(72) Erfinder : **Duneau, André**
**Route de Cocherel, Z.I, No. 1**
**F-27000 Evreux (FR)**

(74) Vertreter : **Patentanwaltsbüro Cohausz & Florack**
**Postfach 14 01 47**
**D-4000 Düsseldorf 1 (DE)**

**Beschreibung**

Die Erfindung betrifft ein Verfahren zum Herstellen einer dreifarbigen Kunststoffabdeckscheibe für eine Automobil-Signalleuchte durch Spritzgießen auf Stoß in einer Verbundform, wobei aus zwei verschiedenen Farben bestehende Teile der Abdeckscheibe vorher getrennt gespritzt und die gespritzten Scheiben dicht nebeneinanderliegend in eine Verbundform eingesetzt werden, wonach in die Verbundform Kunststoff einer dritten Farbe eingespritzt wird.

Das Herstellen von Abdeckscheiben durch Spritzgießen auf Stoß in einer Verbundform hat wegen der Wirtschaftlichkeit dank guter Materialausnutzung gegenüber anderen Verfahren erhebliche Bedeutung erlangt. Bei dem Verfahren wird eine erste Scheibe, beispielsweise eine rote Scheibe, gespritzt und dann in eine Verbundform eingesetzt, in der nun auf Stoß eine Scheibe aus einer zweiten Farbe, beispeilsweise gelb, angespritzt wird. Das ganze wird darauf in eine neue Verbundform eingesetzt, in der der weiße Teil der Abdeckscheibe eingespritzt wird. Dieses bekannte Verfahren erfordert für bestimmte Anordnungen der Farben zwei Anspritzvorgänge in Verbundformen, die langwierig und kostspielig sind, da sie praktisch nicht automatisiert werden können.

Aus der FR-A-23 80 864 ist es bekannt, zwei verschiedenfarbliche Teile einer Abdeckscheibe in eine Verbundform im Abstand zu legen und den Abstand mit Kunststoff einer dritten Farbe auszugießen, um hierdurch einen weiteren Teil der Abdeckscheibe in der dritten Farbe zu erhalten und die vorgefertigten Teile miteinander zu verbinden. Ein solches Verfahren eignet sich nicht für dicht aneinanderliegende vorgefertigte Teile der Abdeckscheibe, da dann ein ausreichender Halt nicht gegeben wird. Liegen zwei Teile der Abdeckscheibe nahe beieinander, so lehrt die FR-A 23 01 357, alle Teile mit farblosem Kunststoff zu überspritzen. Dies führt zu einem erheblichen Materialverbrauch.

Aufgabe der Erfindung ist es, ausgehend vom Stand der Technik gemäß FR-A-2 301 357 ein Verfahren der eingangs genannten Art derart zu verbessern, daß bei geringem Materialverbrauch ein Befestigen dicht nebeneinanderliegender Scheibenbereiche auf einfache Weise ermöglicht wird.

Erfindungsgemäß wird diese Aufgabe dadurch gelöst, daß die vorher gefertigten Teile an den Verbindungslinien Hohlumrandungen aufweisen, in die das Material der dritten Farbe während des Einliegens in der Verbundform eingegespritzt wird, um an diesen Stellen schmale Verbindungsstreifen zu bilden.

Dieses Verfahren führt zu einem sicheren und einfachen Befestigen dicht nebeneinanderliegender Teile der Abdeckscheibe bei geringem Materialverbrauch.

Anhand der Zeichnung wird die Erfindung näher erläutert. Es zeigen :

Figur 1   eine Draufsicht auf eine rote Scheibe ;

Figur 2   eine Draufsicht auf eine gelbe Scheibe ;

Figur 3   eine Draufsicht auf eine Abdeckscheibe, die aus den Scheiben der Figuren 1 und 2 durch Anspritzen nach dem Verfahren gemäß der Erfindung geformt worden ist ;

Figur 4   eine Schnittansicht längs der Linie a-a in Fig. 3 mit einer Teilvergrößerung ; und

Figur 5   eine Schnittansicht längs der Linie b-b in Fig. 3.

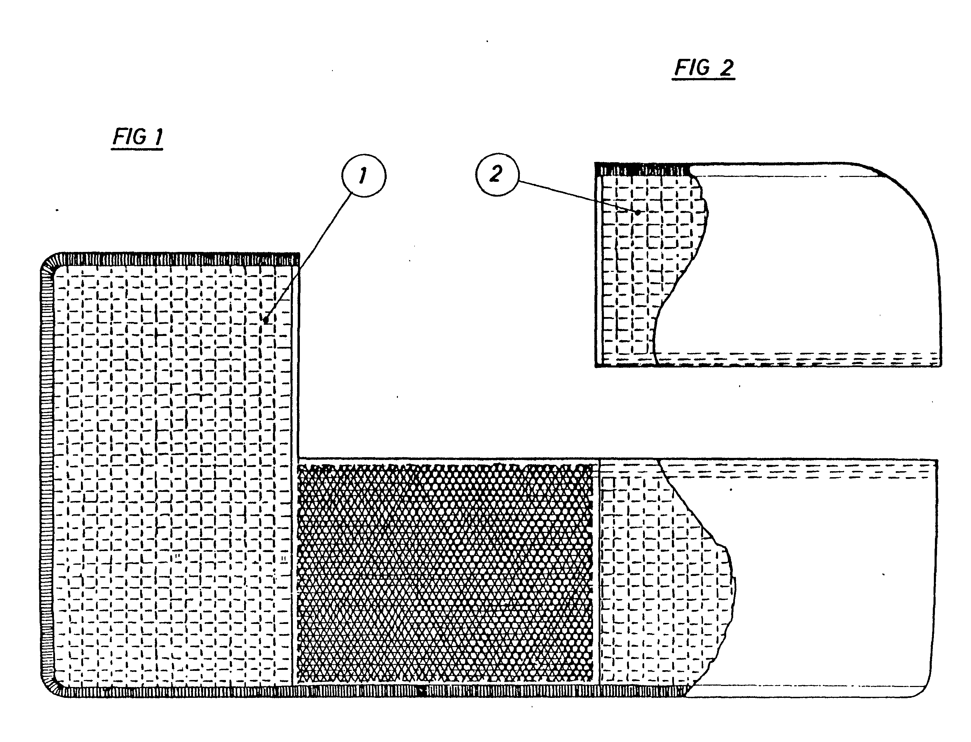

Das Verfahren gemäß der Erfindung wird am Beispiel einer Abdeckscheibe erläutert, die aus einer roten Zone, einer gelben Zone und einer weißen Zone besteht. Zur Herstellung dieser Abdeckscheibe spritzt man erfindungsgemäß getrennt eine rote Scheibe 1 (Fig. 1) und eine gelbe Scheibe 2 (Fig. 2). Jede der beiden Scheiben wird vorteilhafterweise automatisch in einer Mehrfachform gespritzt, wodurch die Fertigungszeit für jede Scheibe verkürzt wird.

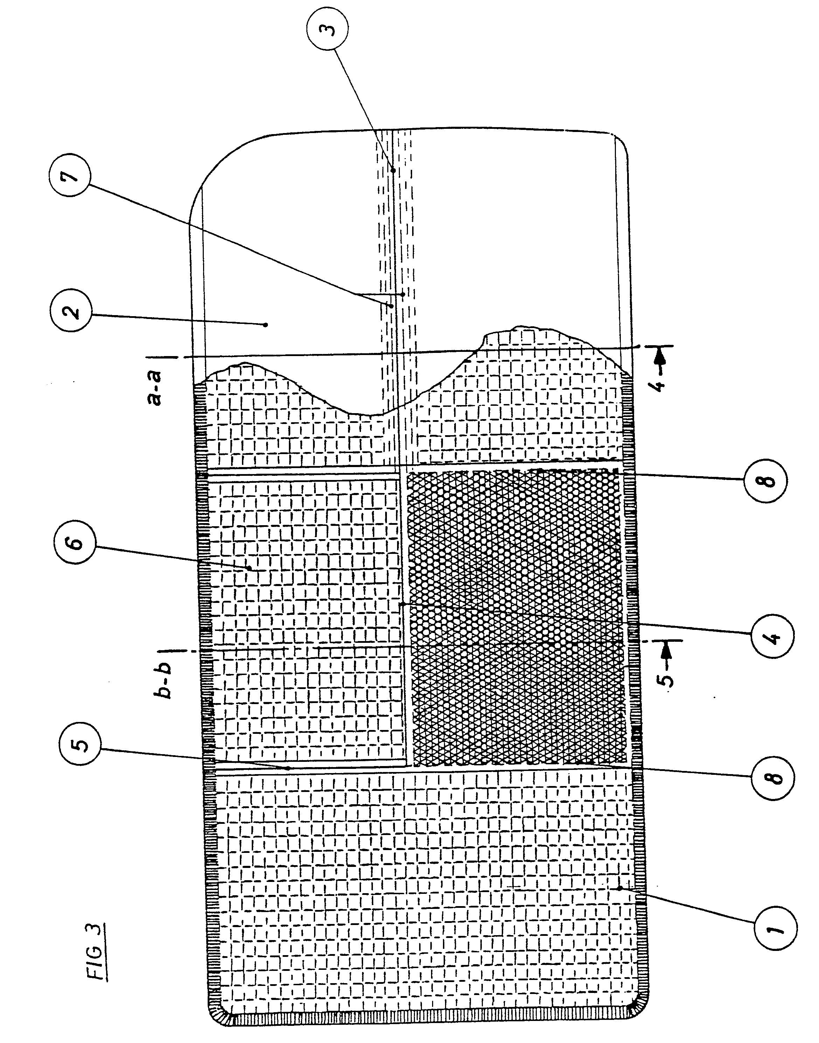

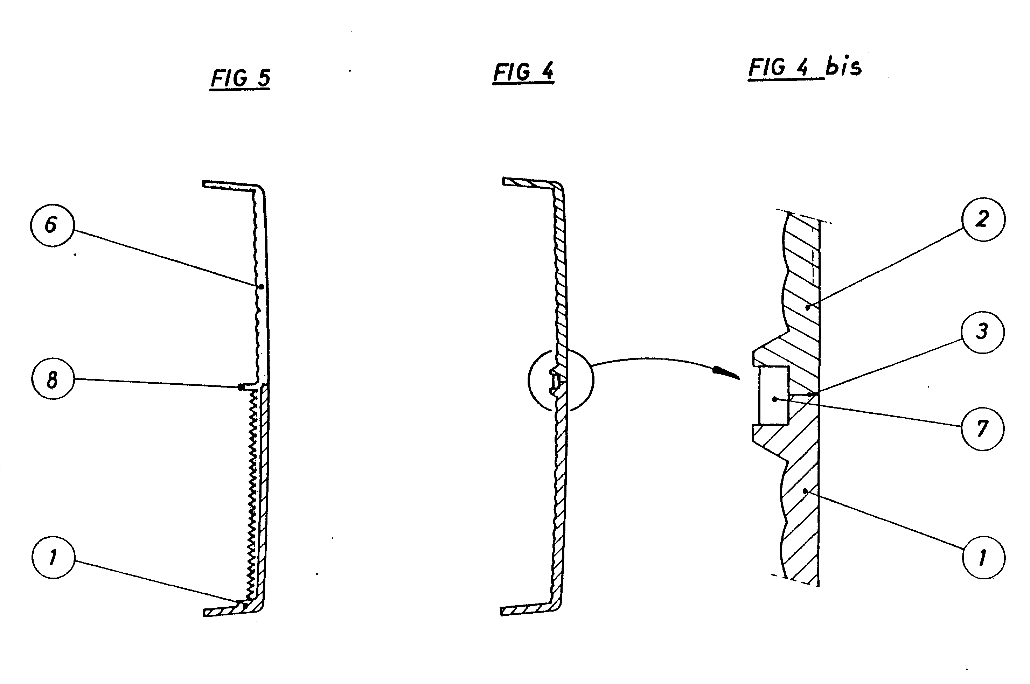

Die Scheiben 1 und 2 werden dann in eine Verbundform eingesetzt, die an der Verbindungslinie 3 der Scheiben 1 und 2 und unterhalb des freien Randes 4 der Scheibe 1 jeweils eine Hohlumrandung** enthält. Beim Einspritzen des weißen Materials in die Verbundform entsteht in dem freien Raum zwischen den Scheiben 1 und 2 eine weiße Scheibe 6 sowie ein Streifen 7 (Fig. 4) aus weißem Material, der die Scheiben 1 und 2 an der Linie 3 verbindet, und ein dünnerer Streifen 8, der die weiße Scheibe 6 mit der roten Scheibe 1 verbindet. Vorteilhafterweise ist die Verbundform in bekannter Weise unterhalb eines Teils der Scheibe 1 mit einem Formhohlraum versehen, in dem beim Einspritzen der weißen Masse gleichzeitig ein Rückstrahler, durch die punktierten Linien 8 in Fig. 3 angedeutet, hergestellt wird.

Das Verfahren gemäß der Erfindung ermöglicht daher, bei der Herstellung dreiteiliger Abdeckscheiben einen Anspritzvorgang des bekannten Verfahrens durch automatischen Spritzguß zu ersetzen. Bei komplizierteren Abdeckscheiben mit mehreren Zonen gleicher Farbe, z. B. rot (Stopplicht, Nebelleuchte) ist das Verfahren noch vorteilhafter, da immer nur ein einziger Anspritzvorgang erforderlich ist.

**Patentanspruch**

Verfahren zum Herstellen einer dreifarbigen Kunststoffabdeckscheibe für eine Automobil-Signalleuchte durch Spritzgießen auf Stoß in einer Verbundform, wobei aus zwei verschiedenen Farben bestehende Teile (1, 2) der Abdeckscheibe vorher getrennt gespritzt und die gespritzten Scheiben (1, 2) dicht nebeneinanderliegend in eine Verbundform eingesetzt werden, wonach in die Verbundform Kunststoff einer drit-

** (Randkanal, cordon creux)

ten Farbe, insbesondere farbloser Kunststoff, eingespritzt wird, dadurch gekennzeichnet, daß die vorher gefertigten Teile (1, 2) an den Verbindungslinien (3) Hohlumrandungen aufweisen, in die das Material der dritten Farbe während des Einliegens in der Verbundform eingespritzt wird, um an diesen Stellen schmale Verbindungsstreifen (7) zu bilden.

## Claim

Method for the production of a three-colour synthetic plastics cover for an automobile indicator lamp by injection-moulding on joint in a composite mould, in which parts (1, 2) of the cover consisting of two different colours are previously injected separately and the injected panes (1, 2) are inserted lying closely by one another into a composite mould, whereafter synthetic plastics material of a third colour, especially colour-less synthetic plastics material, is injected into the composite mould, characterised in that the previously manufactured parts (1, 2) comprise hollow outlinings at the connection lines (3) into which the material of the third colour is injected while the parts lie in the composite mould in order to form narrow connecting strips (7) at these points.

## Revendication

Procédé de fabrication d'un transparent tricolore en matière synthétique pour un feu de signalisation automobile par injection dans un moule de surmoulage dans lequel on injecte séparément au préalable les portions (1, 2) du transparent de deux couleurs distinctes, on place les portions (1, 2) ainsi injectées très proches l'une de l'autre dans un moule de surmoulage, puis on injecte dans le moule de surmoulage de la matière synthétique d'une troisième couleur, en particulier transparente, caractérisé par le fait que les portions (1, 2) fabriquées au préalable présentent sur les lignes de liaison (3) des cordons creux dans lesquels le matériau de la troisième couleur est injecté pendant le séjour dans le moule de surmoulage pour former à ces endroits des bandes de liaison (7) étroites.

FIG 2

FIG 1

0 089 675

FIG 3

FIG 5          FIG 4          FIG 4 bis

0 089 675